# EUROPEAN PATENT APPLICATION

(11) **EP 2 221 649 A1**
(43) Date of publication of application: **25.08.2010**
(21) Application number: 10152791.9
(22) Date of filing: 05.02.2010
(51) Int. Cl.: G02B 6/44, G02B 6/42, H01R 13/42, G02B 6/38

(54) **Cable fixing structure, optical module, and process of manufacture of cable**

(30) Priority: 13.02.2009 JP 2009032014
(71) Applicant: Hosiden Corporation, Yao-shi, Osaka 581-0071 (JP)
(72) Inventor: Sasada, Kosuke, Osaka 581-0071 (JP); Nakagawa, Hiroshi, Osaka 581-0071 (JP); Isoda, Takeshi, Osaka 581-0071 (JP)
(74) Representative: MERH-IP Matias Erny Reichl Hoffmann

(57) **Abstract**

A cable fixing structure for fixing a cable covered with a covering layer made of resin to a receptacle having a chase portion for holding the cable is disclosed in which the cable has, in a segment of the cable, a catch portion formed integrally with the covering layer so as to expand toward the outside of the cable and the receptacle has a recess portion, communicating with the chase portion, in which the catch portion fits.
An optical module is also disclosed, in which an optical device is disposed in a detachable manner in a second recess portion, and wherein an optical axis of an optical fibre of the cable is aligned with an optical axis of the optical drive.
A method of manufacturing a cable having a catch portion is also disclosed, in which resin material is moulded over the cable in order to become integral therewith.

## Description

### BACKGROUND OF THE INVENTION

### FIELD OF THE INVENTION

The present invention relates to a structure for fixing a cable to another component, and more particularly to a structure for fixing an optical fiber cable to another component, an optical module having this fixing structure, and a process for manufacturing the cable.

### DESCRIPTION OF THE RELATED ART

There are the following exemplary methods for fixing optical fiber cables to another component such as an optical module.
(1) Fixing a sheath of an optical fiber cable directly to another component
(2) Fixing a ferrule attached to the periphery of an optical fiber cable to another component
(3) Cutting a part of a sheath of an optical fiber cable and fixing the sheath to another component that has a shape fitting in the sheath
(4) Disposing a clamp on the periphery of an optical fiber cable and fixing the optical fiber cable to another component with the clamp engaged with the other component (See patent document 1.)
Patent document 1: Japanese Patent Application Laid- Open No. 2003-114357

A problem with method (1) is that the adhesive process is complicated and the hardening process takes a long time. In addition, if the optical fiber cable is fixed to an incorrect position, recovery is difficult. In method (2), the same problem as in method (1) arises when the ferrule is connected to the optical fiber cable. In addition to this problem, when the ferrule is fixed by tightening to the optical fiber cable, the optical fiber is pressured and light loss may be caused. A problem with method (3) is that only optical cables covered with a sheath with a machinable thickness can be selected. In method (4), the clamp on the periphery of the optical fiber cable is engaged freely with another component. Accordingly, fixing with an adhesive is necessary so that the optical axis of the optical fiber cable is aligned with the optical axis of an optical component. Thus, method (4) has the same problem as method (1).

### SUMMARY OF THE INVENTION

An object of the present invention is to provide a structure (cable fixing structure) for fixing a cable to a receptacle without using an adhesive, an optical module having this structure, and a process for manufacturing the cable.

The inventive cable fixing structure will be described below. In a cable fixing structure comprising: a cable covered with a covering layer made of resin; and a receptacle having a chase portion for holding the cable, the cable has, in a segment of the cable, a catch portion formed integrally with the covering layer so as to expand toward the outside of the cable and the receptacle has a recess portion, communicating with the chase portion, in which the catch portion fits.

The inventive optical module will be described below. The optical module has the inventive cable fixing structure and an optical device including an optical element, in which a cable used in the cable fixing structure is an optical fiber cable, the optical device is fixed to a receptacle used in the cable fixing structure, and the optical axis of an optical fiber of the optical fiber cable is aligned with the optical axis of an optical element when the optical fiber cable is fixed to the receptacle.

Alternatively, the optical module has the inventive cable fixing structure and an optical device including an optical element, in which a cable used in the cable fixing structure is an optical fiber cable, a receptacle used in the cable fixing structure has a second recess communicating with a chase portion for holding the optical fiber cable, the optical device is attached to the second recess portion in a detachable manner, and the optical axis of an optical fiber of the optical fiber cable is aligned with the optical axis of an optical element when the optical fiber cable is fixed to the receptacle.

The inventive method of manufacturing a cable includes the steps of placing, in a mold, a segment of a cable covered with a covering layer made of resin, injecting melted resin into the mold, cooling the mold, and retrieving, from the mold, the cable for which melted resin adheres to the covering layer so as to expand toward the outside of the cable and cover a periphery of the cable.

### EFFECTS OF THE INVENTION

According to the present invention, the catch portion on the cable fits into the recess portion formed in the receptacle, so the cable can be positioned and fixed to the receptacle without using adhesive.

### BRIEF DESCRIPTION OF THE DRAWINGS

Fig. 1 shows an exemplary configuration of a cable on which a catch portion according to a first embodiment is formed;
Fig. 2 is a plan view of the cable according to the first embodiment;
Fig. 3A is a side elevation view of the cable according to the first embodiment;
Fig. 3B illustrates stress concentration caused by bending moment;
Fig. 4A is a perspective view of a cable fixing structure in which the cable according to the first embodiment does not fit in a receptacle;
Fig. 4B is a perspective view of the cable fixing structure in which the cable according to the first embodiment fits in the receptacle;
Fig. 5 illustrates the tension strength of the cable according to the first embodiment;
Fig. 6 is a plan view of a cable fixing structure in which the cable according to the first embodiment fits in a receptacle for which slopes are formed around an opening of a recess portion;
Fig. 7 shows a sectional view of section A-A of the cable fixing structure shown in Fig. 6;
Fig. 8A is a front perspective view of a cable on which a catch portion according to a first modification is formed;
Fig. 8B is a rear perspective view of the cable on which the catch portion according to the first modification is formed;
Fig. 9 is a perspective view of a cable fixing structure in which the cable according to the first modification fits in the receptacle;
Fig. 10A is a plan view illustrating the size of the catch portion formed on the cable according to the first modification;
Fig. 10B is a plan view of the cable fixing structure in which the cable according to the first modification fits in the receptacle and illustrates the size of the recess portion;
Fig. 11A is a front perspective view of a cable on which a catch portion according to a second modification is formed;
Fig. 11B is a rear perspective view of the cable on which the catch portion according to the second modification is formed;
Fig. 12A is a plan view of a receptacle according to the second modification;
Fig. 12B is a plan view of the cable fixing structure in which the cable according to the second modification fits in the receptacle;
Fig. 13A is a sectional view of section B-B of the cable fixing structure shown in Fig. 12B which is not fitted with a cover;
Fig. 13B is a sectional view of section B-B of the cable fixing structure shown in Fig. 12B which is fitted with a cover;
Fig. 14A is a perspective view of a cable fixing structure in which a cable according to a second embodiment does not fit in the receptacle;
Fig. 14B is a perspective view of the cable fixing structure in which the cable according to the second embodiment fits in the receptacle;
Fig. 15 is a plan view of the cable fixing structure shown in Fig. 14B;
Fig. 16A shows an example of section C-C of the cable fixing structure shown in Fig. 15;
Fig. 16B shows another example of section C-C of the cable fixing structure shown in Fig. 15;
Fig. 17A is a perspective view of a cable fixing structure in which a cable according to a third embodiment does not fit in the receptacle;
Fig. 17B is a perspective view of the cable fixing structure in which the cable according to the third embodiment fits in the receptacle; and
Fig. 18 is a plan view of the cable fixing structure shown in Fig. 17B.

### DETAILED DESCRIPTION

Embodiments of the present invention will now be described with reference to the drawings.

### [First embodiment]

A cable fixing structure and a cable manufacturing method according to a first embodiment of the present invention will be described below.

### <Cable fixing structure 100>

A cable fixing structure 100 according to the first embodiment includes a cable 110 having a catch portion 130; and a receptacle 150.

### <cable 110>

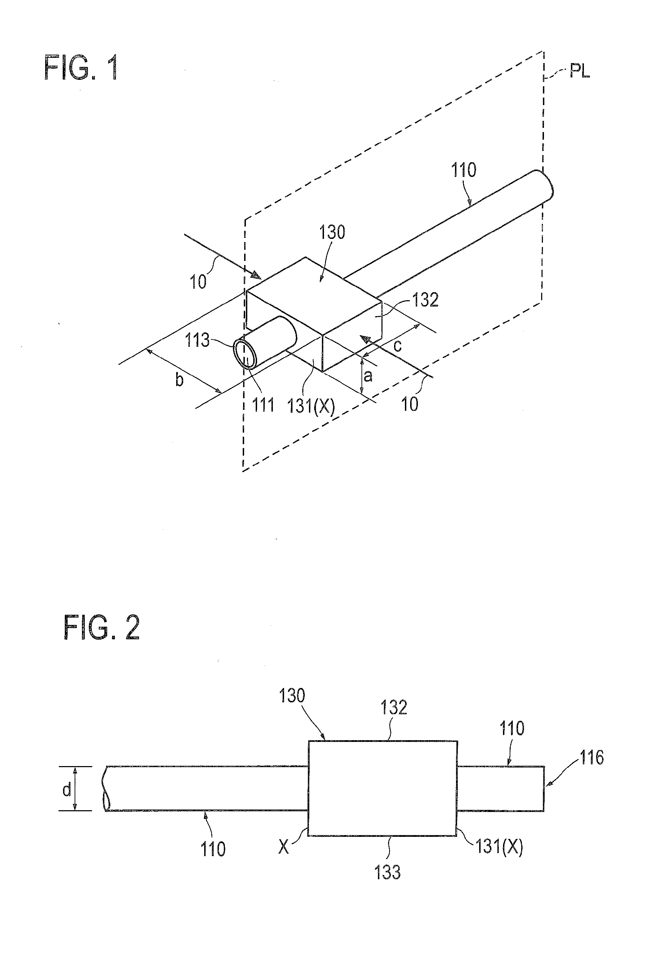

Figs. 1 to 3A show an exemplary structure of the cable 110 having the catch portion 130. The cable 110 is, for example, an optical fiber cable. The cable 110 is not limited to an optical fiber cable; for example, a twisted pair cable, coaxial cable, or power cable can be used. For the cable 110 in this embodiment, the shape of the cross-section orthogonal to the longitudinal direction of the cable is a circle, but other shapes are also allowed.

When the cable 110 is an optical fiber cable, the optical fiber cable has an optical fiber 111 and a covering layer 113. The optical fiber 111 includes only a light transmitting core and a clad. The optical fiber cable is not limited to a structure of this type. For example, if an optical fiber coated with silicone resin is called an optical fiber wire, an optical fiber wire covered with a nylon fiber is called an optical fiber lead, and an optical fiber lead covered with a high tensile strength fiber and an external layer is called an optical fiber cord, then the optical fiber wire, the optical fiber lead, the optical fiber cord, or a plurality of optical fiber leads covered with a protection sheath can be adopted as the optical fiber cable.

An example of the optical fiber 111 is a plastic optical fiber (POF), which has a core made of poly(methyl methacrylate) (PMMA) and a clad made of fluorine-contained resin. The optical fiber 111 may be a non-POF optical fiber: for example, quartz optical fiber or glass optical fiber. The covering layer 113 is made of, for example, nylon 12.

### <Catch portion 130>

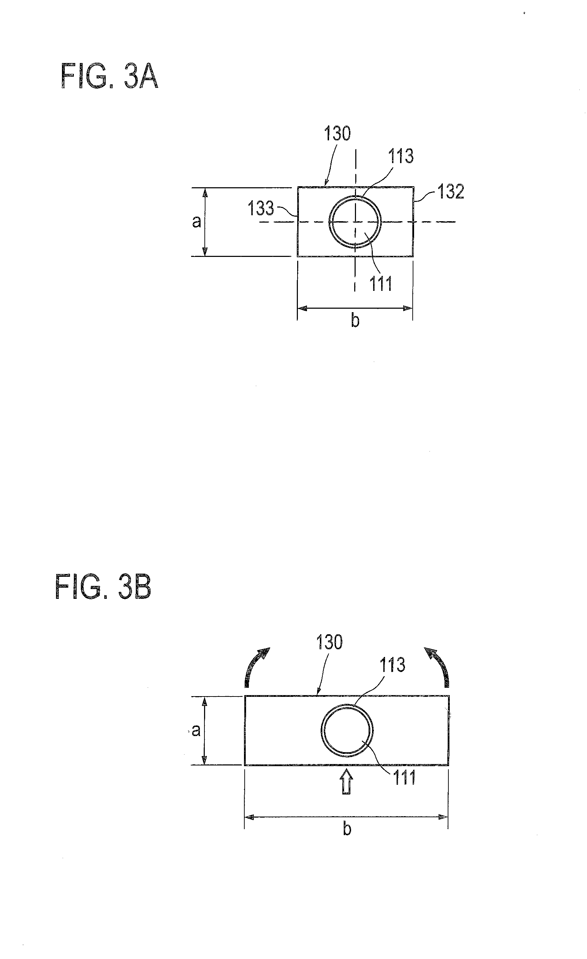

The cable 110 has, at a segment of the cable 110 in its longitudinal direction, at least one catch portion 130 formed integrally with the covering layer 113 so as to expand toward the outside of the cable 110. This segment is not the whole of the cable 110 and more specifically a part of the entire length of the cable 110 in the longitudinal direction of the cable 110. The shape of the catch portion 130 in this embodiment is a rectangular parallelepiped. The catch portion 130 is formed around the periphery of the cable 110 so that a line passing through the centers of two mutually facing planes X of the catch portion 130 is aligned with the central axis of the cable 110. More specifically, letting lengths of two sides of the plane X of the catch portion 130 be a and b (a ≤ b), respectively, and length of the side in the longitudinal direction of the cable 110 be c, and the diameter of the cable 110 be d, then d < a holds. That is, since length a of the shorter side is greater than diameter d of the cable 110, the periphery of the cable 110 is fully covered with the catch portion 130 in the above segment of the cable 110. If length c is too large, the flexibility of the cable 110 in the above segment to which the catch portion 130 is attached is reduced. Therefore, length c is preferably determined by considering the flexibility of the cable 110. If length b is too large, when the catch portion 130 fits in a recess portion 151 of the receptacle 150 as described below, a stress by bending moment concentrates in the vicinity (a position immediately below the cable 110 in this example) of a thin wall part of the catch portion 130, possibly breaking the catch portion 130 (see Fig. 3B). Accordingly, length b is preferably determined to prevent the cable 110 from being broken.

The catch portion 130 preferably has a plane 131 orthogonal to the longitudinal direction of the cable 110. In this embodiment, one of the planes X is the plane 131. When an end face 116 of the cable 110 is formed by cutting or grinding so as to face a light reception element, a light emitting element, etc., the plane 131 can be used as a reference plane to easily form the plane 131 at a constant distance from the reference plane. The end face 116 is, for example, a plane that receives light from the light emitting element or a plane that emits light to the light reception element.

The catch portion 130 is made of resin. Specifically, the catch portion 130 is formed on the covering layer 113 of the cable 110 by outsert molding. In other words, outsert molding lets resin used to form the catch portion 130 adhere to the covering layer 113 of the cable 110.

Since the catch portion 130 is formed by outsert molding in this embodiment, the size of the catch portion 130 can be reduced. Next, a method of manufacturing the cable 110 having the catch portion 130 will be described below.

### <Method of manufacturing cable 110 having catch portion 130>

As described above, the catch portion 130 is formed on the covering layer 113 of the cable 110 by outsert molding. Outsert molding is performed as described below.
(1) The segment of the cable 110 is placed in a mold (not shown) (mold clamping process);
(2) Melted resin injected into the mold (injection process);
(3) The resin is cooled until the shape of the catch portion 130 is stabilized by hardening (cooling process); and
(4) The cable 110 on which the catch portion 130 was formed is removed from the mold (mold opening process).

When the catch portion 130 is formed on the optical fiber cable by outsert molding (concretely, in the injection process), the processing temperature and processing time are set so that light loss in the optical fiber 111 covered with the covering layer 113 does not increase. If the processing temperature is too high or the processing time is too long, the optical fiber 11 is heat-deformed, thereby increasing light loss. In other words, the processing temperature and processing time are set so as to prevent heat deformation due to conduction of the heat of melted resin to the optical fiber 111. If the processing temperature is low, the risk of heat deformation is reduced, but the processing time may be prolonged and adhesion may be insufficient. If the processing temperature is high, the processing time is shortened, but the risk of heat deformation may be increased. It is desirable to set the processing temperature and the processing time with considering production efficiencies and the material of the optical fiber 111 because there is a trade-off between the processing temperature and the processing time.

For example, when the optical fiber 111 is POF and the core is made of PMMA, the clad is made of fluorine-contained resin, the covering layer 113 and the catch portion 130 are made of the nylon 12, and the thickness of the covering layer 113 is 0.1 mm, then the processing temperature ranges from 250 to 270 degrees and the optimum temperature is 260 degrees. The softening and deformation of PMMA starts at approximately 90 degrees, so the heatproof temperature is low. Accordingly, when a component made of PMMA is an insert (outsert) component, use of outsert molding that injects resin at a temperature higher than the heatproof temperature of PMMA is generally avoided. In this embodiment, however, before heat of resin used for outsert molding is transferred to the optical fiber 111 in the cable 110 to heat-deform the optical fiber 111, the outsert molding is completed. In other words, it is sufficient to form the catch portion 130 small enough to complete outsert molding before the optical fiber 111 is heat-deformed. The processing time of outsert molding is properly set based on the thermal conductivities of the core and clad of the optical fiber 111, the thermal conductivity of the covering layer 113, the thickness of the covering layer 113, the shape of catch portion 130, and the size of each component. In other types of cables, it is also sufficient to determine the processing temperature and the processing time of outsert molding so as not to affect the transmission characteristics of internal media.

When the resin for the covering layer 113 is similar to that for the catch portion 130, melted resin used for outsert molding easily adheres to the covering layer 113, thereby achieving the sufficient adhesive strength between the catch portion 130 and the covering layer 113.

The resin for the covering layer 113 may be of course different from that for the catch portion 130. When the resin for the covering layer 113 is different from that for the catch portion 130, however, melted resin used for outsert molding may not sufficiently adhere to the covering layer 113 depending on conditions of insert molding, possibly causing a lack in the adhesive strength between the catch portion 130 and the covering layer 113. If blast processing (surface roughening in which metal or nonmetal particles are blown on a surface at high speed) or primer processing (surface pretreatment in which a light coating of a primer is applied on a surface and is dried) is applied in advance to address this problem, the adhesive strength between the catch portion 130 and the covering layer 113 can be increased. Even when the resin for the covering layer 113 is different from that for the catch portion 130, if the blast processing or the primer processing is applied, melted resin used for outsert molding easily adheres to the covering layer 113.

Materials for the covering layer 113 and the catch portion 130 may be different from those illustrated. The resin used as a hot-melt adhesive can be used for the covering layer 113 and the catch portion 130. In this case, the processing temperature and processing time of outsert molding need to be set properly based on the characteristics etc. of resin used.

When the catch portion 130 is symmetric about a plane PL including the longitudinal direction of the cable 110, a mold used for outsert molding has two resin injection openings placed symmetrically about the plane PL. When the catch portion 130 is rectangular-parallelepiped-shaped as shown in Figs. 1 to 3B, the two resin injection openings are disposed in surfaces of the mold that form two planes 132 and 133 including the shorter sides (with length a in this example) of the planes X (the two planes through which the cable 110 passes). The reason why the two resin injection openings are not disposed in surfaces of the mold that form two planes including the longer sides (with length b in this example) of the planes X is that melted resin is injected into the mold at a relatively high pressure in outsert molding. If the two resin injection openings are disposed in the two surfaces of the mold that form two planes including the longer sides (with length b in this example) of the planes X, the injection pressure of melted resin may affect the cable 110 because the distance (approximately (a-d)/2) between the cable 110 and the two resin injection openings is short. On the other hand, if the two resin injection openings are disposed in the surfaces of the mold that form the two planes 132 and 133 including the shorter sides (with length a in this example) of the planes X, the injection pressure of melted resin does not affect the cable 110 because the distance (approximately (b-d)/2) between the cable 110 and the two resin injection openings is long.

When the cable 110 is placed at the same distance from the two resin injection openings within the mold, melted resin is preferably injected into the mold concurrently at the same pressure from the two resin injection openings during outsert molding (the resin injection direction is indicated by reference numeral 10 in Fig. 1). In this type of outsert molding, the pressure applied to the cable 110, especially to the optical fiber 111 is equalized relative to the plane PL, thereby preventing the cable 110, especially the optical fiber 111 from receiving an uneven load that degrades the optical transmission characteristics of the optical fiber 111.

The shape and dimensions of the catch portion 130 formed by outsert molding depend on the machining accuracy of a mold. If the mold is created at high machining accuracy, the catch portion 130 with the corresponding machining accuracy can be formed. Accordingly, the cable 110 can be positioned accurately relative to the receptacle 150, which will be described later. This also enables the end face 116 of the cable 110 to be easily formed accurately at a constant distance from the plane 131 of the catch portion 130 by using the plane 131 as a reference plane.

Unlike other molding methods, outsert molding can reduce the size of the catch portion 130. This is because, in outsert molding, it is sufficient to provide a gap allowing melted resin to flow between the covering layer 113 of the cable 110 and the mold. For example, if the diameter of the cable 110 is assumed to be d, it is possible to form a small catch portion 130 with a thickness of d+0.2 mm to d+3 mm and a length in the longitudinal direction of the cable of 1 mm to 3 mm. In addition, sufficient adhesive strength and tension strength can be obtained between the covering layer 113 and the catch portion 130.

### <Receptacle 150>

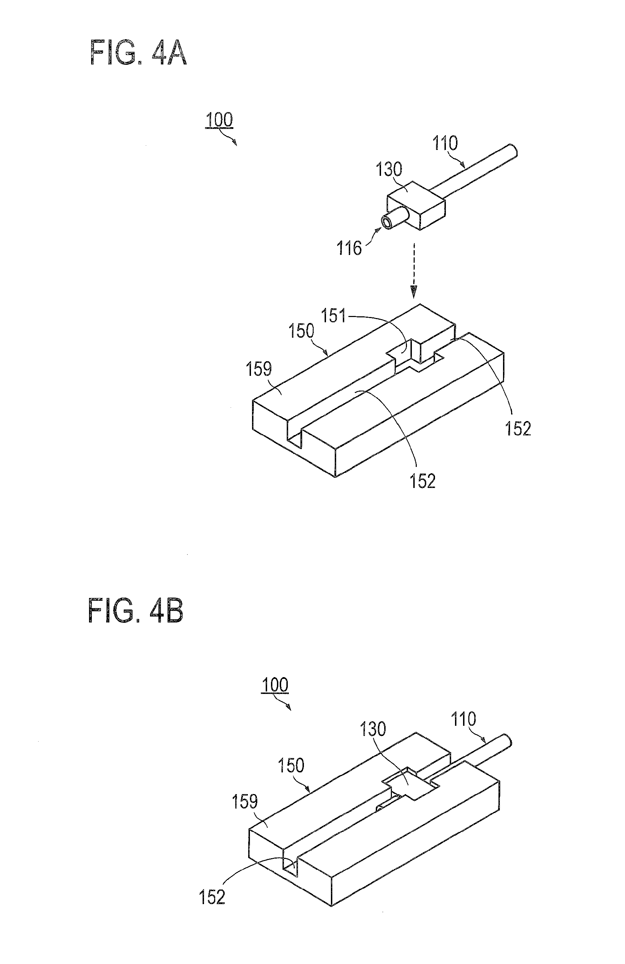

As shown in Figs. 4A and 4B, the receptacle 150 has the recess portion 151 in which the catch portion 130 fits and a straight chase portion 152 for holding the cable 110, in a plane portion 159 of the rectangular-parallelepiped-shaped receptacle 150. The recess portion 151 communicates with the chase portion 152. For example, the receptacle 150 is formed by injection molding of resin.

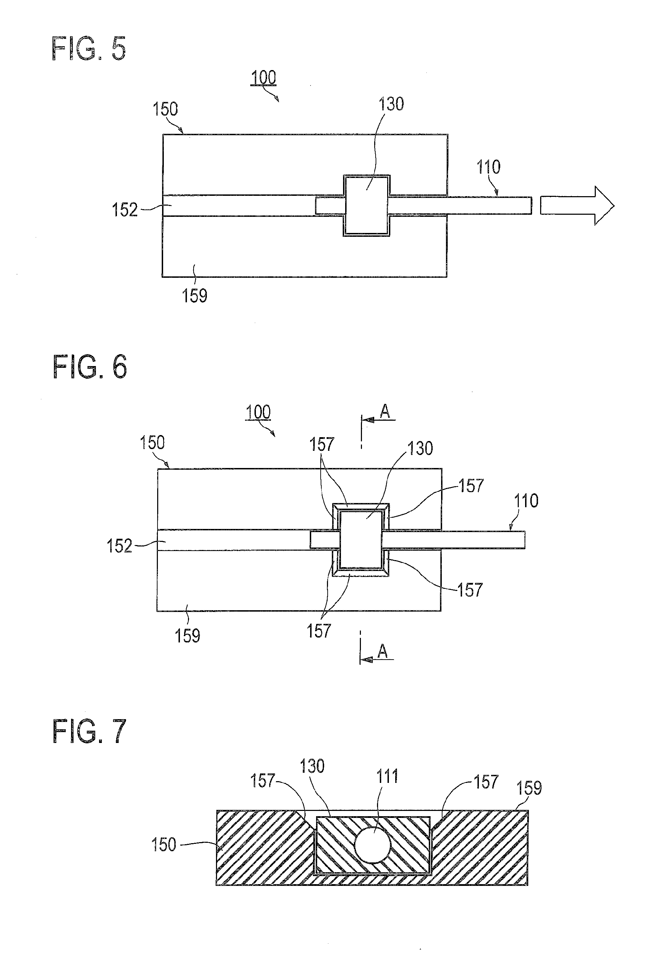

The catch portion 130 is press-fitted in the recess portion 151 with inside dimensions slightly larger than the outside dimensions (especially, length b of the longer side of the plane X and length c of the side in the longitudinal direction of the cable 110) of the catch portion 130, so that the cable 110 is tightly fixed to the receptacle 150. This achieves the positioning and three-dimensional optical alignment of the end face 116 of the optical fiber 111 at the same time. Even if the cable 110 is pulled in the longitudinal direction of the cable 110, the cable 110 is prevented from slipping out of the receptacle 150 because the catch portion 130 fits in the recess portion (see Fig. 5). For example, when the resin for the covering layer 113 is similar to that for the catch portion 130, the tension strength is almost the same as the rupture strength of the covering layer 113.

If the catch portion 130 is rectangular-parallelepiped-shaped, the recess portion 151 of the receptacle 150 is also rectangular-parallelepiped-shaped. As long as the catch portion 130 fits in the recess portion 151, the catch portion 130 may also have another shape. The shape of the catch portion 130 may be a cylinder or triangle pole, and it may also be a sphere if the catch portion 130 does not need to have the reference surface 131. In addition, the edges of the catch portion 130 may be chamfered so that the catch portion 130 is easily press-fitted in the recess portion 151.

In the situation where the catch portion fits in the recess portion 151, the cable 110 is held in the chase portion 152. In this embodiment, the depth of the chase portion 152 is larger than the diameter of the cable 110 because the cable fixing structure 100 may be put in a case (not shown) or may be fitted with a cover 45. The chase portion 152 has a width narrow enough to eliminate play between the chase portion 152 and the cable 110 and wide enough to prevent the light transmission characteristics of the optical fiber 111 from being affected by pressure from both side walls of the chase portion 152. Generally, the chase portion 152 has an enough width to provide natural contact between both side walls of the chase portion 152 and the cable 110. Note that drawings are often illustrated as if components were not in contact to clearly identify their shapes in this document.

The receptacle 150 may have slopes 157 formed around an opening of the recess portion 151 (see Figs. 6 and 7). The slopes 157 of the receptacle 150 lead the catch portion 130 so that the catch portion 130 can be easily inserted into the recess portion 151 of the receptacle 150. This structure is especially useful when the catch portion 130 is press-fitted in the recess portion 151.

### [First modification]

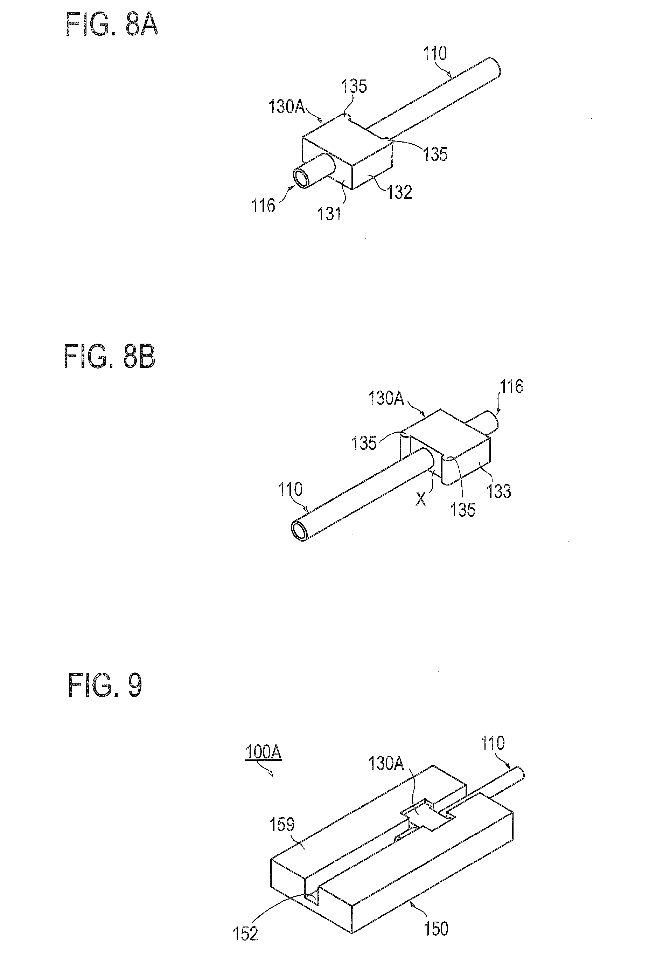

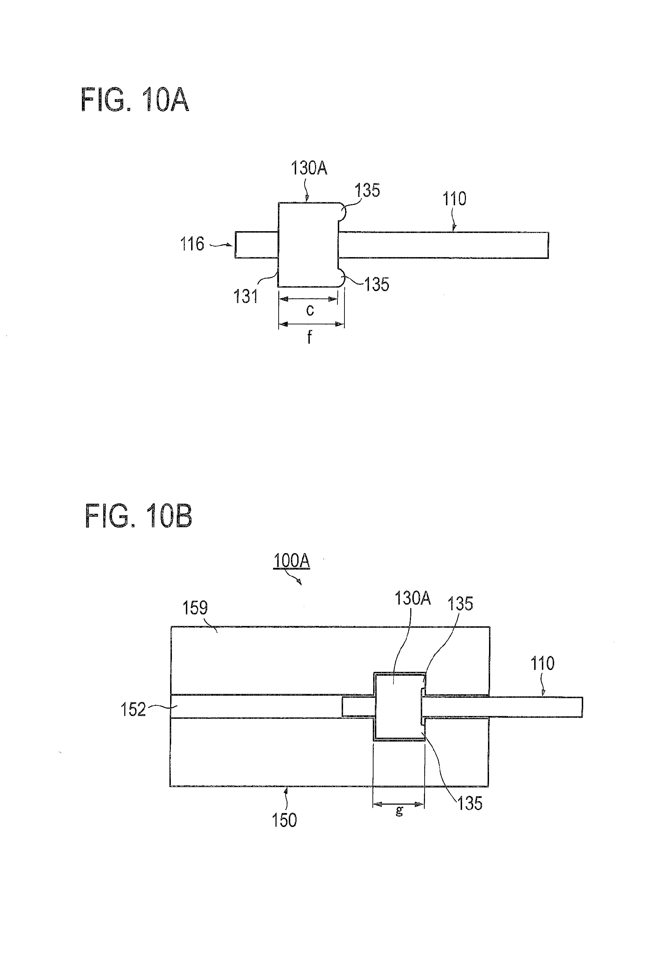

Referring to Figs. 8A, 8B, 9, 10A, and 10B, a cable fixing structure 100A, which is a first modification of the first embodiment, will be described below. The same components as in the first embodiment are assigned the same reference numerals to omit duplicate descriptions.

### <Catch portion 130A>

A catch portion 130A has two ridge-like projecting parts 135 extending in the direction in which the catch portion 130A is inserted into the recess portion 151. In the first modification, the two projecting parts 135 are disposed on the plane other than the plane 131, which is used as the reference plane, of the two planes X. The projecting parts 135 are compressively deformed as described below, so the projecting parts 135 are preferably positioned as far as possible from the cable 110 to prevent the optical fiber 111 from being affected by internal stress.

If the distance between the two planes X of the catch portion 130A is assumed to be c, the length of the side of the catch portion 130A in the longitudinal direction of the cable 110 is assumed to be f, the length of the recess portion 151 in the longitudinal direction of the chase portion 152 is assumed to be g, then c < g < f holds. Accordingly, when the catch portion 130A is press-fitted in the recess portion 151, the projecting parts 135 is compressively deformed in the longitudinal direction of the cable 110, but the reference plane 131 of the catch portion 130A makes contact with the receptacle 150 at a high contact pressure, thereby tightly fixing the catch portion 130A to the receptacle 150 with respect to the longitudinal direction of the cable 110. Even when the projecting parts 135 are disposed on the reference plane 131 of the catch portion 130A, the same effect can be obtained. The projecting parts 135 may be disposed on at least one of the two planes 132 and 133 including the shorter sides (with length a in this example) of the planes X. In this structure, the catch portion 130A is tightly fixed to the receptacle 150 with respect to the direction orthogonal to the longitudinal direction of the cable 110.

The shape of the projecting parts 135 may be different from the one in this example and may be, for example, a hemisphere. When the projecting parts 135 are hemisphere-shaped, a plurality of projecting parts 135 are preferably aligned in the direction in which the catch portion 130A is inserted into the recess portion 151 of the receptacle 150. In addition, the edges of projecting parts 135 may be chamfered.

That is, one or more projecting parts 135 are disposed on at least one surface B of the four surfaces of the catch portion 130A that face the side walls of the recess portion 151 with the rectangular-parallelepiped-shaped catch portion 130A fitting in the recess portion 151; the distance f between the projecting parts 135 and a surface C opposite to the surface B on which the projecting parts 135 are disposed is longer than the distance g between the side wall of the recess portion 151 that faces the surface B and the side wall of the recess portion 151 that faces the surface C with the catch portion 130A fitting in the recess portion 151; the catch portion 130A fits into the recess portion 151 with the projecting parts 135 compressively deformed.

### [Second modification]

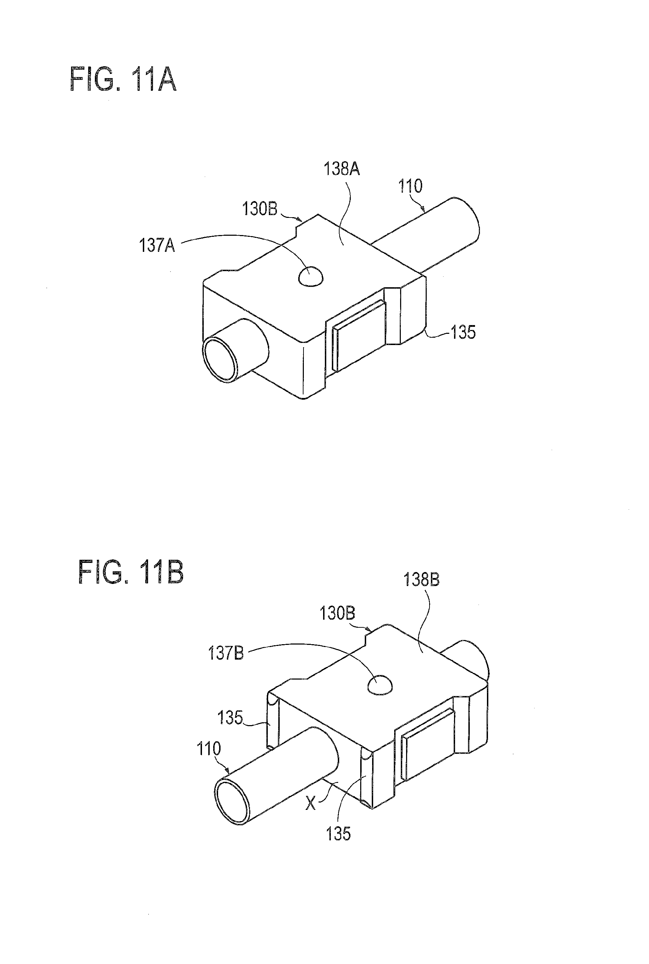

Referring to Figs. 11A, 11B, 12A, 12B, 13A, and 13B, a cable fixing structure 100B, which is a second modification of the first embodiment, will be described below. The same components as in the first embodiment or the first modification are assigned the same reference numerals to omit duplicate descriptions.

### <Catch portion 130B and receptacle 150A>

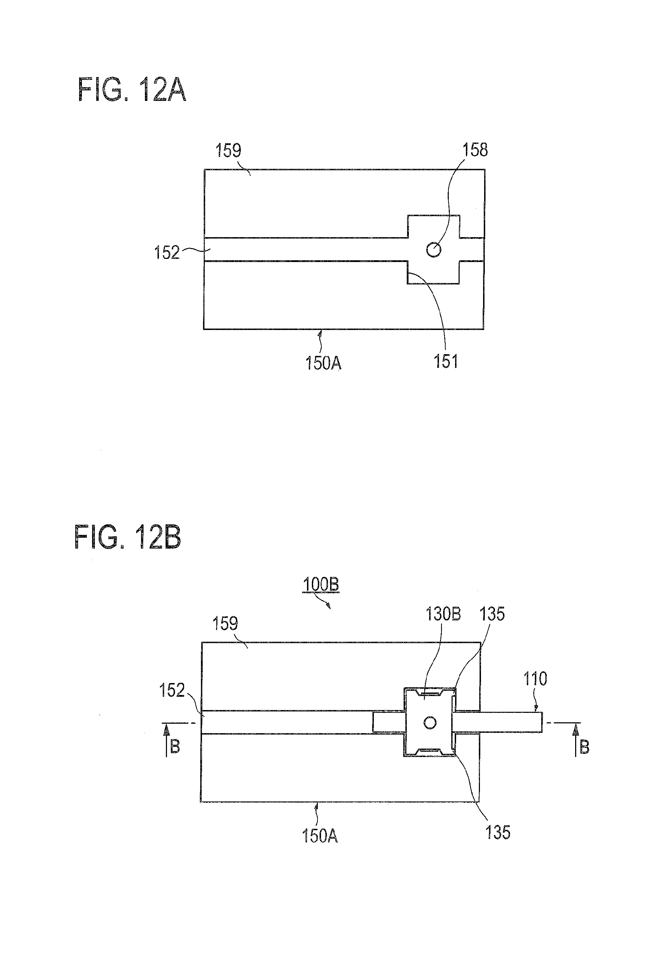

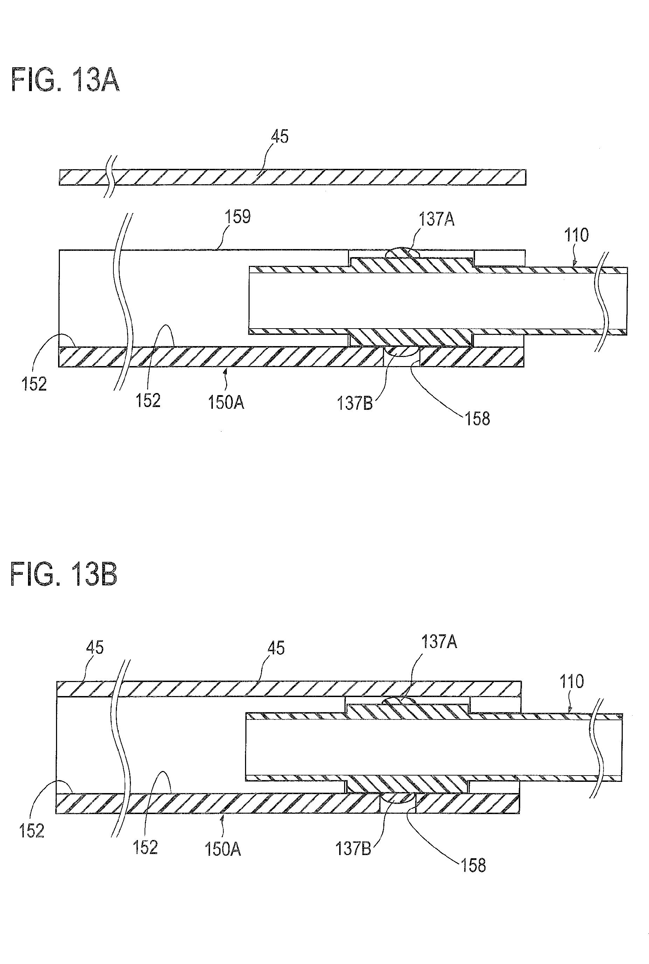

A receptacle 150A has a through hole 158 at the center of the bottom of the recess portion 151 (see Fig. 12A). A catch portion 130B has a first salient 137B at the center of a surface 138B of the catch portion 130B facing the receptacle 150A with the catch portion 130B fitting in the receptacle 150A (referred to below as the fit state) (see Fig. 11B). The catch portion 130B has a second salient 137A at the center of a surface 138A opposite to the surface 138B (see Fig. 11A). In the fit state, the first salient 137B fits in the through hole 158 and the second salient 137A projects slightly above the plane portion 159 (see Fig. 13A).

In the second modification, the cable fixing structure 100B is fitted with the cover 45. The cover 45 presses the second salient 137A in the direction in which the catch portion 130B is inserted into the recess portion 151 of the receptacle 150A and the surface 138B is pressed against the receptacle 150A, thereby suppressing the motion of the cable 110 in this direction.

When the upper and lower sides of the cable 110 are not defined, if the catch portion 130B has the two salients 137A and 137B as in the second modification, the cable 110 can be fitted in the receptacle 150A with any of the surfaces 138A and 138B of the cable 110 facing the receptacle 150A. When the upper and lower sides of the cable 110 are defined, the catch portion 130B has, for example, only the second salient 137A.

The pressure applied by the cover 45 is small enough to cause a slight compressive deformation of the second salient 137A and the pressure has been confirmed to have no adverse effects on the transmission characteristics of the optical fiber 111. A modification in which salients are disposed at four corners of the catch portion 130B is also allowed. In this modification, when the upper and lower sides of the cable 110 are not defined, four through holes are disposed in positions on the bottom of the recess portion 151 that correspond to the salients at the four corners. [Second embodiment]

An optical module 290 according to a second embodiment will be described below. The same components as in the first embodiment are assigned the same reference numerals to omit descriptions.

### <Optical module 290>

The optical module 290 includes a cable fixing structure and an optical device. This cable fixing structure has the cable 110 with the catch portion 130 according to the first embodiment and a receptacle 150B. The optical device includes an optical element 163 (including a lens), a substrate (not shown) on which circuit components such as integrated circuits for driving and controlling the optical element 163 are mounted, and terminals 75 one ends of which are connected to the substrate. The optical device has four terminals of the same shape in this example, but only one terminal is assigned a reference numeral to simplify drawings.

### <Receptacle 150B>

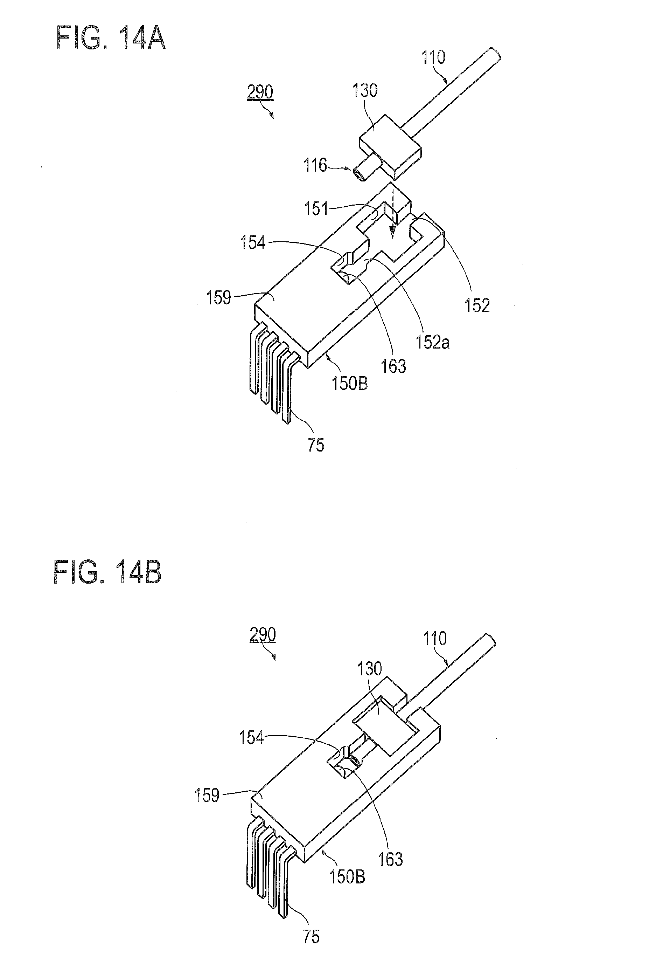

The receptacle 150B includes a recess portion 151 (referred to below as the first recess portion) in which the catch portion 130 fits, straight chase portions 152 and 152a for holding the cable 110, and a second recess portion 154, in the plane portion 159 of the receptacle 150B, as shown in Fig. 14A. The chase portion 152a holds a part of the cable 110 that extends beyond the catch portion 130 to the end face 116. The first recess portion 151 communicates with the second recess portion 154 via the chase portion 152a. In the situation where the catch portion 130 fits in the first recess portion 151, the end face 116 of the cable 110 positions so as to face onto the second recess portion 154.

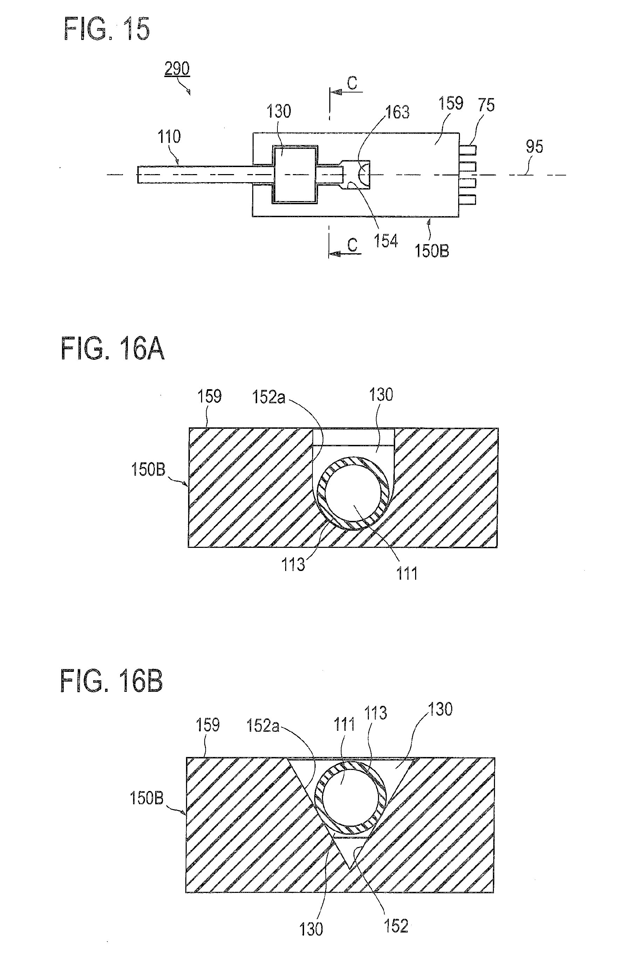

The receptacle 150B is made of resin and the substrate (not shown) of the optical device is embedded in the receptacle 150B by insert molding. In this state, as shown in Figs. 14A and 14B, the terminals 75 project from the receptacle 150B and the lens of the optical element 163 is exposed to the second recess portion 154. In the situation where the catch portion 130 fits in the first recess portion 151, the lens of the optical element 163 faces the end face 116 of the cable 110 and the optical axis of the optical fiber 111 is aligned with that of the optical element 163 (reference numeral 95 in Fig. 15 indicates the optical axis). That is, fixing the cable 110 with the catch portion 130 to the receptacle 150B achieves the positioning and three-dimensional optical alignment of the optical fiber 111 at the same time. The end face 116 of the optical fiber 111 positions at a constant distance from the reference plane 131 in the situation where the catch portion 130 fits in the first recess portion 151 so that the end face 116 closely faces the lens of the optical element 163 in a non-contact manner.

The shape of the cross section, orthogonal to the longitudinal direction of the cable 110, of the chase portions 152 and 152a in the receptacle 150B is not limited to a rectangle. For example, the chase portions 152 and 152a may be U- or V-shaped (see Figs. 16A and 16B). Only the chase portion 152a may be formed into such shapes.

### [Third embodiment]

An optical module 390 according to a third embodiment will be described below. The same components as in the first and second embodiments are assigned the same reference numerals to omit duplicate descriptions.

### <Optical module 390>

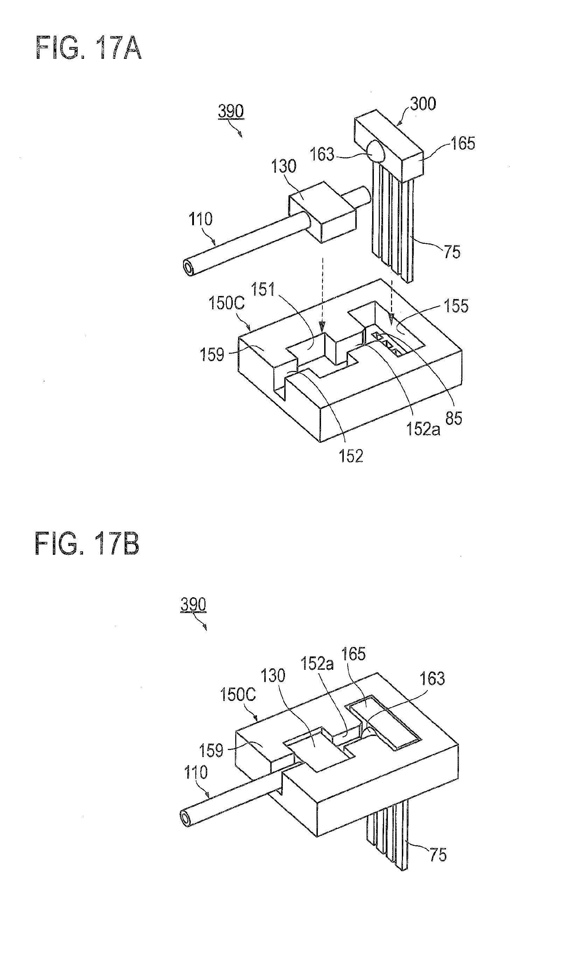

The optical module 390 includes a cable fixing structure and an optical device 300. This cable fixing structure has the cable 110 with the catch portion 130 according to the first embodiment and a receptacle 150C. The optical device 300 includes the optical element 163 (including a lens), a substrate (not shown) on which circuit components such as integrated circuits for driving and controlling the optical element 163 are mounted, and terminals 75 one ends of which are connected to the substrate. This substrate and optical element 163 are embedded by injection molding in a body 165 made of resin and, as shown in Fig. 17A, the lens of the optical element 163 and terminals 75 project from the body 165. The optical device has four terminals of the same shape in this example, but only one terminal is assigned a reference numerical to simplify drawings.

### <Receptacle 150C>

The receptacle 150C includes the first recess portion 151 in which the catch portion 130 fits, straight chase portions 152 and 152a for holding the cable 110, and a third recess portion 155, in the plane portion 159 of the receptacle 150C, as shown in Fig. 17A. The chase portion 152a holds a part of the cable 110 that extends beyond the catch portion 130 to the end face 116. The first recess portion 151 communicates with the third recess portion 155 via the chase portion 152a. In the situation where the catch portion 130 fits in the first recess portion 151, the end face 116 of the cable 110 positions so as to face onto the third recess portion 155. There are four through holes 85 in the bottom of the third recess portion 155.

The optical device 300 is attached to the third recess portion 155 of the receptacle 150C. More specifically, the body 165 of the optical device 300 is pushed into the third recess portion 155 with the terminals 75 of the optical device 300 aligned with the through holes 85 of the third recess portion 155, so that the body 165 of the optical device 300 is placed in the third recess portion 155. For example, if the opening dimensions of the through holes 85 nearly equal the periphery dimensions of the terminals 75, play between these components is limited and the body 165 of the optical device 300 is tightly fixed to the receptacle 150C. Since no adhesive is used, the optical device 300 can be removed from the receptacle 150C by pushing the terminals 75 toward the receptacle 150C. That is, this structure allows the optical device 300 to be replaced.

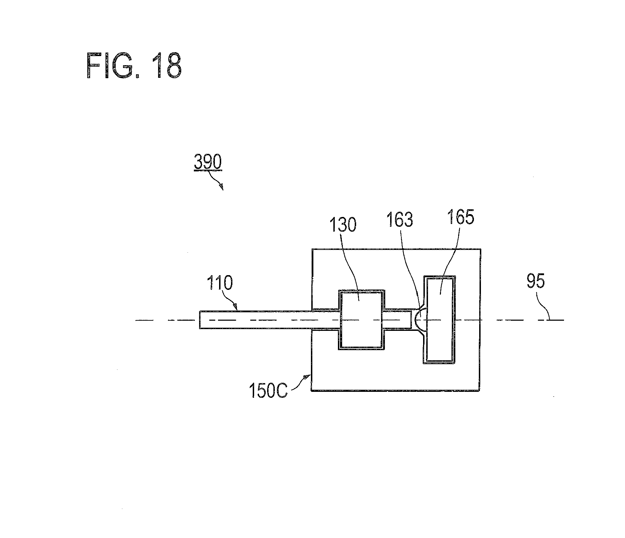

In this embodiment, in the situation where the body 165 of the optical device 300 is placed in the third recess portion 155, the lens of the optical element 163 positions so as to face onto the chase portion 152a (see Figs. 17B and 18).

When the cable 110 and the optical device 300 are fixed to the receptacle 150C, the lens of the optical element 163 faces the end face 116 of the cable 110 and the optical axis of the optical fiber 111 is aligned with that of the optical element 163 (reference numeral 95 in Fig. 18 indicates the optical axis). That is, the positioning and three-dimensional optical alignment of the end face 116 of the optical fiber 111 and the lens of the optical element 163 can be achieved at the same time by fixing the cable 110 with the catch portion 130 to the receptacle 150C and placing the body of the optical device 300 in the third recess portion 155. The end face 116 of the optical fiber 111 is formed at a constant distance from the reference plane 131 so that the end face 116 of the optical fiber 111 closely faces the lens of the optical element 163 in a non-contact manner in the situation where the cable 110 and the optical device 300 are fixed to the receptacle 150C.

The technical characteristics described in the first embodiment, the first modification of the first embodiment, and the second modification of the first embodiment can be applied to the second embodiment and the third embodiment.

The foregoing description of the embodiments of the invention has been presented for the purpose of illustration and description. It is not intended to be exhaustive or to limit the invention to the precise form disclosed. Modifications or variations are possible in light of the above teachings. The embodiment was chosen and described to provide the best illustration of the principles of the invention and its practical application, and to enable one of ordinary skill in the art to utilize the invention in various embodiments and with various modifications as are suited to the particular use contemplated. All such modifications and variations are within the scope of the invention as determined by the appended claims when interpreted in accordance with the breadth to which they are fairly, legally, and equitably entitled.

## Claims

1. A cable fixing structure comprising: a cable covered with a covering layer made of resin; and a receptacle having a chase portion for holding the cable, wherein:
the cable has, in a segment of the cable, a catch portion formed integrally with the covering layer so as to expand toward the outside of the cable; and
the receptacle has a recess portion in which the catch portion fits, the recess portion communicating with the chase portion.

2. The cable fixing structure according to claim 1, wherein the catch portion is formed so as to cover a periphery of the cable in the segment.

3. The cable fixing structure according to claim 1 or 2, wherein the catch portion is formed by outsert molding.

4. The cable fixing structure according to any one of claims 1 to 3, wherein:
the catch portion is rectangular-parallelepiped-shaped, and one or more projecting parts are disposed on at least one surface B of four surfaces of the catch portion that face side walls of the recess portion when the catch portion fits in the recess portion;
a distance between the projecting parts and a surface C opposite to the surface B on which the projecting parts are disposed is longer than a distance between a side wall of the recess portion that faces the surface B, and a side wall of the recess portion that faces the surface C when the catch portion fits in the recess portion; and
the catch portion is fits into the recess portion with the projecting parts compressively deformed.

5. The cable fixing structure according to any one of claims 1 to 4, wherein:
the catch portion has a plane orthogonal to a longitudinal direction of the cable; and
an end face of the cable is formed at a predetermined distance from the plane.

6. The cable fixing structure according to any one of claims 1 to 5, wherein slopes are formed around an opening of the recess portion.

7. An optical module comprising: a cable fixing structure; and an optical device including an optical element; wherein:
the cable fixing structure comprises an optical fiber cable covered with a covering layer made of resin, the optical fiber cable having a catch portion formed integrally with the covering layer so as to expand toward the outside of the optical fiber cable in a segment of the optical fiber cable; and a receptacle having a chase portion for holding the optical fiber cable and a recess portion in which the catch portion fits, the recess portion communicating with the chase portion;
the optical device is fixed to the receptacle; and
an optical axis of an optical fiber of the optical fiber cable is aligned with an optical axis of the optical element when the optical fiber cable is fixed to the receptacle.

8. An optical module comprising: a cable fixing structure; and an optical device including an optical element; wherein:
the cable fixing structure comprises an optical fiber cable covered with a covering layer made of resin, the optical fiber cable having a catch portion formed integrally with the covering layer so as to expand toward the outside of the optical fiber cable in a segment of the optical fiber cable; and a receptacle having a chase portion for holding the optical fiber cable, a first recess portion in which the catch portion fits, the first recess portion communicating with the chase portion, and a second recess portion communicating with the chase portion;
the optical device is attached to the second recess portion in a detachable manner; and
an optical axis of an optical fiber of the optical fiber cable is aligned with an optical axis of the optical element when the optical fiber cable is fixed to the receptacle.

9. A method of manufacturing a cable, comprising the steps of:
placing, in a mold, a segment of the cable covered with a covering layer made of resin;
injecting melted resin into the mold;
cooling the mold; and
retrieving, from the mold, the cable for which the melted resin adheres to the covering layer so as to expand toward the outside of the cable and cover a periphery of the cable.

10. The method of manufacturing a cable according to claim 9, wherein:
the cable is an optical fiber cable; and
a processing temperature and a processing time in the step of injecting melted resin are set so that light loss in an optical fiber does not increase.
